# EUROPEAN PATENT SPECIFICATION

(11) **EP 3 648 540 B1**
(45) Date of publication and mention of the grant of the patent: **05.01.2022**
(21) Application number: 18203354.8
(22) Date of filing: 30.10.2018
(51) Int. Cl.: H04W 76/15, H04W 28/02, H04W 40/34

(54) **MAPPING QUALITY-OF-SERVICE FLOWS TO RADIO BEARERS**
ABBILDUNG VON DIENSTGÜTEFLÜSSEN AUF FUNKTRÄGER
MAPPAGE DE FLUX DE QUALITÉ DE SERVICE À DES PORTEUSES RADIO

(43) Date of publication of application: 06.05.2020
(73) Proprietor: Nokia Technologies Oy, 02610 Espoo (FI)
(72) Inventor: Laitila, Matti, 90650 Oulu (FI); Sebire, Benoist, 106-6141 Tokyo (JP)
(74) Representative: Kolster Oy Ab

(56) References cited:
- WO-A1-2018/084795
- "3rd Generation Partnership Project; Technical Specification Group Radio Access Network; Evolved Universal Terrestrial Radio Access (E-UTRA) and NR; Multi-connectivity; Stage 2 (Release 15)", 3GPP DRAFT; 37340-F30, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , 1 October 2018 (2018-10-01), XP051519479, Retrieved from the Internet: URL:http://www.3gpp.org/ftp/tsg%5Fran/WG2% 5FRL2/Specifications/201809%5Ffinal%5Fspec s%5Fafter%5FRAN%5F81/37340%2Df30%2Ezip [retrieved on 2018-10-01]
- "3rd Generation Partnership Project; Technical Specification Group Radio Access Network; NR; NR and NG-RAN Overall Description; Stage 2 (Release 15)", 3GPP STANDARD; TECHNICAL SPECIFICATION; 3GPP TS 38.300, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. V15.3.1, 7 October 2018 (2018-10-07), pages 1-92, XP051487627, [retrieved on 2018-10-07]

## Description

### Field

Various embodiments described herein relate to the field of wireless communications and, particularly, to mapping between quality of service (QoS) flows and radio bearers.

### Background

In a modern cellular communication system, such as a fifth generation (5G) cellular communication system, a protocol data unit (PDU) session is established between a user equipment (UE) and a core network of the cellular communication system, e.g. a user plane function (UPF) of the core network. Quality of service (QoS) flows may then be established within the PDU session for transfer of data, and the QoS flows may be mapped to radio bearers for transmitting the data over a radio interface.

The document: 3rd Generation Partnership Project; Technical Specification Group Radio Access Network; Evolved Universal Terrestrial Radio Access (E-UTRA) and NR; Multi-connectivity; Stage 2 (Release 15)", 3GPP DRAFT; 37340-F30, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , 1 October 2018 (2018-10-01), discloses an overview of the multi-connectivity operation using E-UTRA and NR radio access technologies.

### Brief description

Some aspects of the invention are defined by the independent claims.

Some embodiments of the invention are defined in the dependent claims.

According to an aspect, there is provided an apparatus for a secondary access node of a connection between a terminal device and a cellular communication system, comprising means for performing: detecting, from an uplink data packet received from the terminal device over a data radio bearer, a new quality-of-service (QoS) flow in the data radio bearer; upon said detecting, generating and transmitting to a master access node of the connection a message indicating said detection of the new QoS flow, the message comprising an identifier of the new QoS flow.

In an embodiment, the message is a notification message to which the apparatus waits for no response from the master access node.

In an embodiment, the message is a reconfiguration request requesting the master access node to reconfigure at least one radio bearer for the new QoS flow.

According to another aspect, there is provided an apparatus for a terminal device of a cellular communication system, comprising means for performing: detecting a new QoS flow in the terminal device; determining whether a default radio bearer of the terminal device is hosted by a secondary access node or a master access node of a connection between the terminal device and the cellular communication system; if the default radio bearer is determined to be hosted by the secondary access node, generating and transmitting to the master access node a message indicating said establishment of the new QoS flow, the message comprising an identifier of the new QoS flow.

In an embodiment, the means are further configured, if the default radio bearer is determined to be hosted by the master access node, to not generate the message.

In an embodiment, the message is a service data adaptation protocol message.

In an embodiment, the message has the same format as an end-marker control protocol data unit.

In an embodiment, the new QoS flow does not have, at the time of said detecting, a preconfigured mapping with one or more radio bearers and is therefore mapped with the default radio bearer.

According to another aspect, there is provided an apparatus for a master access node of a connection between a terminal device and a cellular communication system, comprising means for performing: receiving, from the secondary access node configured to host a default radio bearer of the terminal device, or from the terminal device, a message indicating establishment of a new QoS flow for the terminal device, the message comprising an identifier of the new QoS flow; and upon receiving the message, determining a host for the new QoS flow amongst the master access node and the secondary access node; and performing, upon determining that the master access node shall host the new QoS flow, relocation of the new QoS flow from the secondary access node to the master access node.

In an embodiment, the means are further configured to receive the message from the terminal device as a user plane message.

In an embodiment, the means are further configured to receive the message from the secondary access node as a notification message and, upon determining that the secondary access node shall host the new QoS flow, to transmit no response to the notification message to the secondary access node.

In an embodiment, the message further comprises an identifier of the terminal device and/or an identifier of a protocol data unit session of the new QoS flow.

According to another aspect, there is provided a method for a secondary access node of a connection between a terminal device and a cellular communication system, comprising: detecting, by the secondary access node from an uplink data packet received from the terminal device over a data radio bearer, a new QoS flow in the data radio bearer; upon said detecting, generating and transmitting to a master access node of the connection a message indicating said detection of the new QoS flow, the message comprising an identifier of the new QoS flow.

According to another aspect, there is provided a method for a terminal device of a cellular communication system, comprising: detecting a new quality-of-service, QoS, flow in the terminal device; determining whether a default radio bearer of the terminal device is hosted by a secondary access node or a master access node of a connection between the terminal device and the cellular communication system; if the default radio bearer is determined to be hosted by the secondary access node, generating and transmitting to the master access node a message indicating said establishment of the new QoS flow, the message comprising an identifier of the new QoS flow.

In an embodiment, the method further comprises omitting generation of the message, if the default radio bearer is determined to be hosted by the master access node.

According to another aspect, there is provided a method for a master access node of a connection between a terminal device and a cellular communication system, comprising: receiving, from the secondary access node configured to host a default radio bearer of the terminal device or from the terminal device, a message indicating establishment of a new QoS flow for the terminal device, the message comprising an identifier of the new QoS flow; and upon receiving the message, determining a host for the new QoS flow amongst the master access node and the secondary access node; and performing, upon determining that the master access node shall host the new QoS flow, relocation of the new QoS flow from the secondary access node to the master access node.

In an embodiment, the method further comprises receiving the message from the terminal device as a user plane message.

In an embodiment, the method further comprises receiving the message from the secondary access node as a notification message and, upon determining that the secondary access node shall host the new QoS flow, transmitting no response to the notification message to the secondary access node.

According to an aspect, there is provided a computer program product embodied on a computer-readable transitory or non-transitory distribution medium, comprising a computer program code causing an apparatus executing the computer program code to execute a computer process for a secondary access node of a connection between a terminal device and a cellular communication system, the computer process comprising: detecting, by the secondary access node from an uplink data packet received from the terminal device over a data radio bearer, a new QoS flow in the data radio bearer; upon said detecting, generating and transmitting to a master access node of the connection a message indicating said detection of the new QoS flow, the message comprising an identifier of the new QoS flow.

According to an aspect, there is provided a computer program product embodied on a computer-readable transitory or non-transitory distribution medium, comprising a computer program code causing an apparatus executing the computer program code to execute a computer process for a terminal device of a cellular communication system, the computer process comprising: detecting a new QoS flow in the terminal device; determining whether a default radio bearer of the terminal device is hosted by a secondary access node or a master access node of a connection between the terminal device and the cellular communication system; if the default radio bearer is determined to be hosted by the secondary access node, generating and transmitting to the master access node a message indicating said establishment of the new QoS flow, the message comprising an identifier of the new QoS flow.

According to an aspect, there is provided a computer program product embodied on a computer-readable transitory or non-transitory distribution medium, comprising a computer program code causing an apparatus executing the computer program code to execute a computer process for a master access node of a connection between a terminal device and a cellular communication system, the computer process comprising: receiving, from the secondary access node configured to host a default radio bearer of the terminal device or from the terminal device, a message indicating establishment of a new QoS flow for the terminal device, the message comprising an identifier of the new QoS flow; and upon receiving the message, determining a host for the new QoS flow amongst the master access node and the secondary access node; and performing, upon determining that the master access node shall host the new QoS flow, relocation of the new QoS flow from the secondary access node to the master access node.

### List of drawings

Embodiments are described below, by way of example only, with reference to the accompanying drawings, in which
Figure 1 illustrates a wireless communication scenario to which some embodiments of the invention may be applied;
Figure 2 illustrates logical connections between a terminal device and elements of a cellular communication system;
Figures 3 to 5 illustrate flow diagrams of processes for reporting a new quality-of-service flow to a master access node according to some embodiments of the invention;
Figures 6 and 7 illustrates embodiments where a secondary access node reports a new quality-of-service flow to the master access node;
Figure 8 illustrates an embodiment of selection logic for the secondary access node;
Figure 9 illustrates an embodiment where a terminal device reports a new quality-of-service flow to the master access node; and
Figures 10 and 11 illustrate block diagrams of structures of apparatuses according to some embodiments of the invention.

### Description of embodiments

The following embodiments are examples. Although the specification may refer to "an", "one", or "some" embodiment(s) in several locations, this does not necessarily mean that each such reference is to the same embodiment(s), or that the feature only applies to a single embodiment. Single features of different embodiments may also be combined to provide other embodiments. Furthermore, words "comprising" and "including" should be understood as not limiting the described embodiments to consist of only those features that have been mentioned and such embodiments may contain also features/structures that have not been specifically mentioned.

In the following, different exemplifying embodiments will be described using, as an example of an access architecture to which the embodiments may be applied, a radio access architecture based on long term evolution advanced (LTE Advanced, LTE-A) or new radio of a fifth generation cellular communication system (NR, 5G), without restricting the embodiments to such an architecture, however. It is obvious for a person skilled in the art that the embodiments may also be applied to other kinds of communications networks having suitable means by adjusting parameters and procedures appropriately. Some examples of other options for suitable systems are the universal mobile telecommunications system (UMTS) radio access network (UTRAN or E-UTRAN) and long term evolution (LTE, the same as E-UTRA).

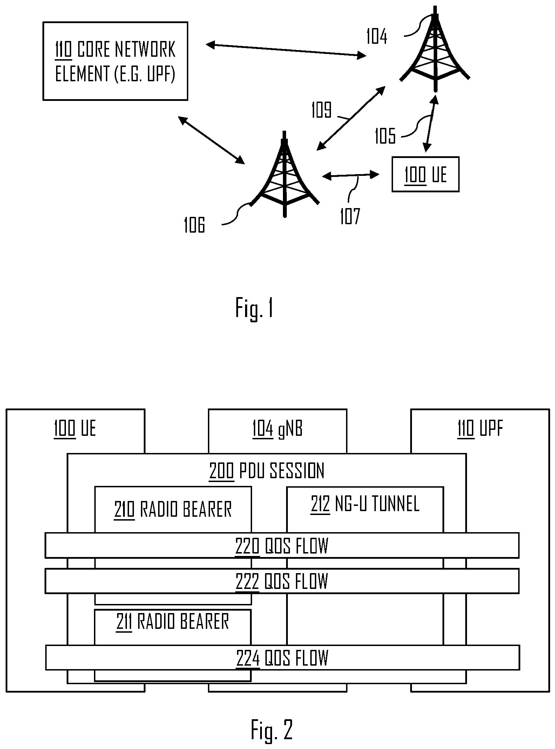

Figure 1 depicts an example of a simplified system architecture only showing some elements and functional entities, all being logical units, whose implementation may differ from what is shown. The example of Figure 1 shows a part of a radio access network represented by access nodes 104, 106. Referring to Figure 1, a terminal device 100 may be configured to be in a wireless connection on one or more communication channels in a cell with an access node, such as (e/g)NodeB 104, 106 providing the cell. A physical link 105, 107 from the terminal device to the access node 104, 106 is called an uplink or a reverse link and a physical link from the access node to the terminal device is called a downlink or a forward link. It should be appreciated that access nodes 104, 106 or their functionalities may be implemented by using any node, host, server or access point etc. entity suitable for such a usage. The term (e/g)NodeB used above may refer to eNodeB (i.e. eNB) and/or gNodeB (i.e. gNB), for example.

A communication system typically comprises more than one access node in which case the access nodes may also be configured to communicate with one another over links 109, wired or wireless, designed for the purpose. An example of such a link is Xn interface in the 5G system. These links may be used for signaling purposes. The access node may be a computing device configured to control the radio resources of the cellular communication system it is coupled to. Access node, such as the access node 104 or 106, may also be called a base station, an access point, a network node, network element or any other type of interfacing device. The access node includes or is coupled to transceivers. From the transceivers of the access node, a connection is provided to one or more antenna units that establish bi-directional radio links to user devices. The antenna unit may comprise a plurality of antennas or antenna elements. The access node 104 is further connected to a core network 110 (CN or next generation core NGC). The core network typically comprises core network elements such as a serving gateway (S-GW, routing and forwarding user data packets), packet data network gateway (P-GW), for providing connectivity of terminal devices (UEs) to external packet data networks, or mobile management entity (MME), etc. The 5G specifications define a user plane function (UPF) as one of the core network elements 110 that handle user plane packet forwarding.

The terminal device 100 (also called UE, user equipment, user terminal, etc.) illustrates one type of an apparatus to which resources on the air interface are allocated and assigned. The user device typically refers to a portable computing device that includes wireless mobile communication devices operating with or without a subscriber identification module (SIM), including, but not limited to, the following types of devices: a mobile station (mobile phone), smartphone, personal digital assistant (PDA), handset, device using a wireless modem (alarm or measurement device, etc.), laptop and/or touch screen computer, tablet, game console, notebook, multimedia device, Machine Type Communication (MTC) device, and/or vehicular user device. It should be appreciated that a user device may also be a nearly exclusive uplink only device, of which an example is a camera or video camera loading images or video clips to a network. A user device may also be a device having capability to operate in Internet of Things (loT) network which is a scenario in which objects are provided with the ability to transfer data over a network without requiring human-to-human or human-to-computer interaction. The user device (or in some embodiments a layer 3 relay node) is configured to perform one or more of user equipment functionalities. The user device may also be called a subscriber unit, mobile station, remote terminal, access terminal, user terminal or user equipment (UE) just to mention but a few names or apparatuses.

The current architecture in LTE networks is fully distributed in the radio and fully centralized in the core network. The low latency applications and services in 5G require to bring the content close to the radio which leads to local break out and multi-access edge computing (MEC). 5G enables analytics and knowledge generation to occur at the source of the data. This approach requires leveraging resources that may not be continuously connected to a network such as laptops, smartphones, tablets and sensors. MEC provides a distributed computing environment for application and service hosting. It also has the ability to store and process content in close proximity to cellular subscribers for faster response time. Edge computing covers a wide range of technologies such as wireless sensor networks, mobile data acquisition, mobile signature analysis, cooperative distributed peer-to-peer ad hoc networking and processing also classifiable as local cloud/fog computing and grid/mesh computing, dew computing, mobile edge computing, cloudlet, distributed data storage and retrieval, autonomic self-healing networks, remote cloud services, augmented and virtual reality, data caching, Internet of Things (massive connectivity and/or latency critical), critical communications (autonomous vehicles, traffic safety, real-time analytics, time-critical control, healthcare applications).

The cellular communication system is also able to communicate with other networks, such as a public switched telephone network or the Internet, or utilize services provided by them. The cellular communication network may also be able to support the usage of cloud services, for example at least part of core network operations may be carried out as a cloud service.

Edge cloud may be brought into radio access network (RAN) by utilizing network function virtualization (NVF) and software defined networking (SDN). Using edge cloud may mean access node operations to be carried out, at least partly, in a server, host or node operationally coupled to a remote radio head or base station comprising radio parts. It is also possible that node operations will be distributed among a plurality of servers, nodes or hosts. Application of cloudRAN architecture enables RAN real time functions being carried out at the RAN side (in a distributed unit) and non-real time functions being carried out in a centralized manner in a centralized unit (CU). The CU may be comprised in the core network or in the cloud but, in some embodiments, the CU is comprised in one or more of the access nodes.

It is obvious for a person skilled in the art that the depicted system is only an example of a part of a radio access system and in practice, the system may comprise a plurality of access nodes, such as (e/gNodeBs), the terminal device may have an access to a plurality of radio cells and the system may comprise also other apparatuses, such as physical layer relay nodes or other network elements, etc. In the embodiments described below, the terminal device employs multi-connectivity where multiple access nodes 104, 106 are configured to provide the terminal device 100 with radio access simultaneously. In such a multi-connectivity scenario, one of the access nodes 104, 106 may be a master access node managing the connections. The master access node may communicate with the terminal device over a primary component carrier. A secondary access node 104, 106 may provide the radio access under the control of the master access node 104, 106 via one or more secondary component carriers.

In a geographical area of the cellular communication system, a plurality of different kinds of radio cells as well as a plurality of radio cells may be provided. Radio cells may comprise macro cells (or umbrella cells) which are large cells, usually having a diameter of up to tens of kilometers, and smaller cells such as micro-, femto- or picocells. The access nodes of Figure 1 may provide any kind of these cells. A cellular radio system may be implemented as a multilayer network including several kinds of cells. Typically, in multilayer networks, one access node provides one kind of a cell or cells, and thus a plurality of access nodes are required to provide such a network structure.

Figure 2 illustrates data routing between the core network and the terminal device. The core network element establishing a protocol data unit (PDU) session with the terminal device 100 is the UPF in the 5G system. For each terminal device, the core network may establish one or more PDU sessions. Within the same PDU session, one or more quality-of-service (QoS) flows 220, 222, 224 may be established. Each QoS flow may have unique requirements in terms of data throughput, latency, etc. For example, one QoS flow may be allocated to a voice service while another QoS flow may be allocated to a web browser or e-mail service. In the 5G system, the access node 104 may map the QoS flows to radio bearers 210, 211 flexibly. As illustrated in Figure 2, multiple QoS flows 220, 222 may be allocated to the same radio bearer 210. One or more radio bearers 210, 211 may be established from the same access node to the terminal device. Additionally, the terminal device may have established simultaneous radio bearers with multiple access nodes 104, 106. In such a case, each access node 104, 106 may forward data packets directly between the UPF and the terminal device. In other words, even the secondary access node may forward a data packet received from the terminal device directly to the UPF and not through the master access node. An interface between the access node 104 and the UPF is called next generation user plane interface (NG-U).

A task of the master access node may be to determine a hosting access node (a host) for each QoS flow. The host for a given QoS flow may be any one of the access nodes serving the terminal device, or even a new access node may be assigned to serve the terminal device. One of the radio bearers of the terminal device 100 may be defined as a default radio bearer. The default radio bearer may be a data radio bearer. Whenever a new QoS flow is established for the terminal device and the new QoS has no preconfigured mapping with one or more radio bearers, the terminal device 100 may assign the new QoS flow to the default radio bearer. When the default radio bearer is managed by the secondary access node, the new QoS flow may remain unnoticed by the master access node. As a consequence, the master access node may not be able to assign a new host for the new QoS flow and the new QoS flow may remain mapped to the default radio bearer that is possibly not suitable for the QoS flow. For example, if the new QoS flow requires low latency and the default radio bearer is for e-mail or another delay-tolerant data, quality of experience may degrade.

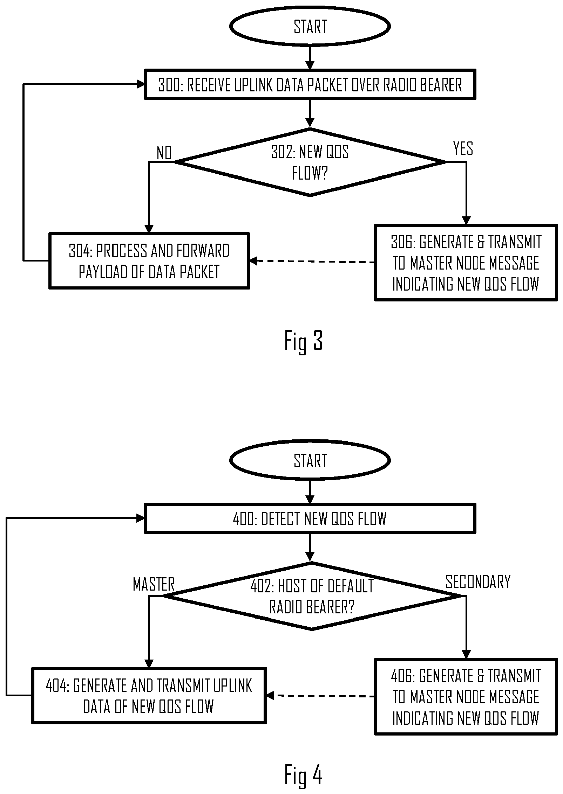

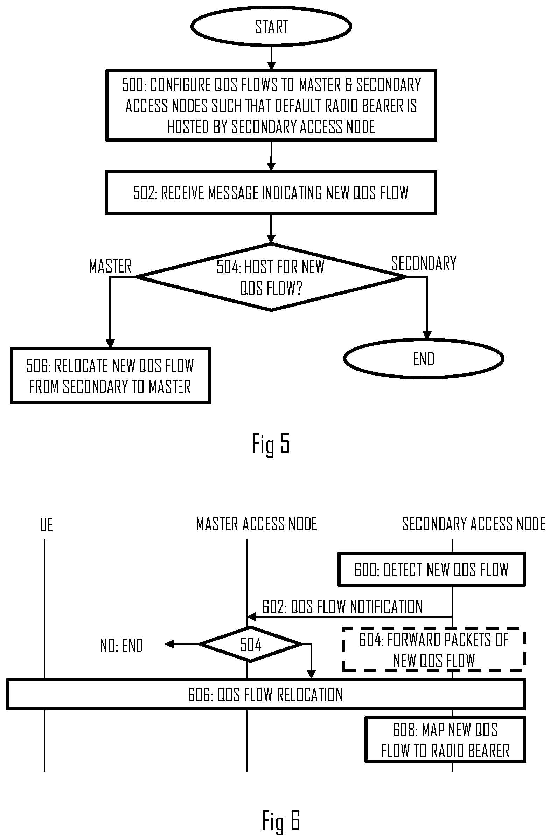

Figures 3 to 5 illustrate some embodiments for establishing a host for a QoS flow. Figure 3 illustrates a process carried out by the secondary access node, Figure 4 illustrates a process carried out by the terminal device, and Figure 5 illustrates a process carried out by the master access node.

Referring to Figure 3, the process executed in the secondary access node comprises: detecting (YES in block 302), from an uplink data packet received (block 300) from the terminal device over a data radio bearer, a new QoS, flow in the data radio bearer; and upon said detecting in block 302, generating and transmitting (block 306) to a master access node of the connection a message indicating said detection of the new QoS flow, the message comprising an identifier of the new QoS flow.

In an embodiment, upon detecting in block 302 that the received uplink data packet belongs to a QoS flow readily configured and assigned to a radio bearer in the secondary access node, the process proceeds to block 304 where payload of the data packet is forwarded towards the core network, e.g. to the UPF 110.

In an embodiment, upon executing block 306, the secondary access node may perform block 304 and forward the payload of the new QoS flow towards the core network. When executing block 304 in this manner, the new QoS flow may still be associated with the default radio bearer and no QoS-flow-specific configurations have been made, e.g. to meet QoS requirements of the QoS flow. Data over the new QoS flow may be forwarded by the secondary access node. The UPF or another core network element receiving the forwarded payload is capable of detecting that the forwarded payload belongs to the new QoS flow and is capable of forming the necessary configurations for the new QoS flow on the core network side.

In an embodiment, the uplink data packet is a protocol data unit (PDU), such as a service data adaptation protocol PDU. In an embodiment, the secondary access node detects the new QoS flow by analysing a SDAP PDU received from the terminal device. If a QoS flow indicator comprised in a header of the SDAP message is new to the secondary access node, the detection of the new QoS flow may be triggered.

Referring to Figure 4, the process executed in the terminal device comprises: detecting (block 400) a new QoS flow in the terminal device; determining (block 402) whether a default radio bearer of the terminal device is hosted by a secondary access node or a master access node of a connection between the terminal device and the cellular communication system; if the default radio bearer is determined to be hosted by the secondary access node (SECONDARY in block 402), generating and transmitting to the master access node a message indicating said establishment of the new QoS flow (block 406), the message comprising an identifier of the new QoS flow.

In an embodiment, if in block 402 it is determined that the host of the default radio bearer is the master access node, the process may proceed to block 404 where an uplink data packet of the new QoS flow is generated and transmitted to the master access node over the default radio bearer hosted by the master access node. In this case, the uplink data packet serves as the message indicating the new QoS flow and the transmission of a separate indication message may be omitted.

In an embodiment, the process proceeds from block 406 to block 404. In such a case, the generated uplink data packet is transmitted to the secondary access node over the default radio bearer hosted by the secondary access node.

In an embodiment, the detection of the new QoS flow may be triggered in block 400 further when the new QoS flow has no preconfigured mapping with one or more data radio bearers and, as a consequence, is mapped with the default radio bearer. It may be understood to mean that the terminal device has not yet received any radio bearer assignment from any access node.

Referring to Figure 5, the process executed in the master access node comprises: an optional step of configuring a secondary access node of the connection to host a default radio bearer of the terminal device (block 500); receiving (block 502) from the secondary access node configured to host the default radio bearer or the terminal device a message indicating establishment of a new QoS flow for the terminal device, the message comprising an identifier of the new QoS flow; and upon receiving the message, determining (block 504) a host for the new QoS flow amongst the master access node and the secondary access node; and performing, upon determining that the master access node shall host the new QoS flow (MASTER in block 504), relocation of the new QoS flow from the secondary access node to the master access node (block 506).

In an embodiment, if the master access node determines in block 504 that the secondary access node that transmitted the message hosts the new QoS flow (SECONDARY in block 504), the process may end.

An initial condition in block 500 may be that at least one QoS flow of the terminal device is mapped to a data radio bearer hosted by the master access node in block 500 and at least one other QoS flow of the terminal device is mapped to a data radio bearer hosted by the secondary access node. Another possible scenario is that only the secondary access node hosts a data radio bearer for the terminal device, the default radio bearer. In yet another scenario, the master access node hosts one data radio bearer while the secondary access node hosts only the default radio bearer.

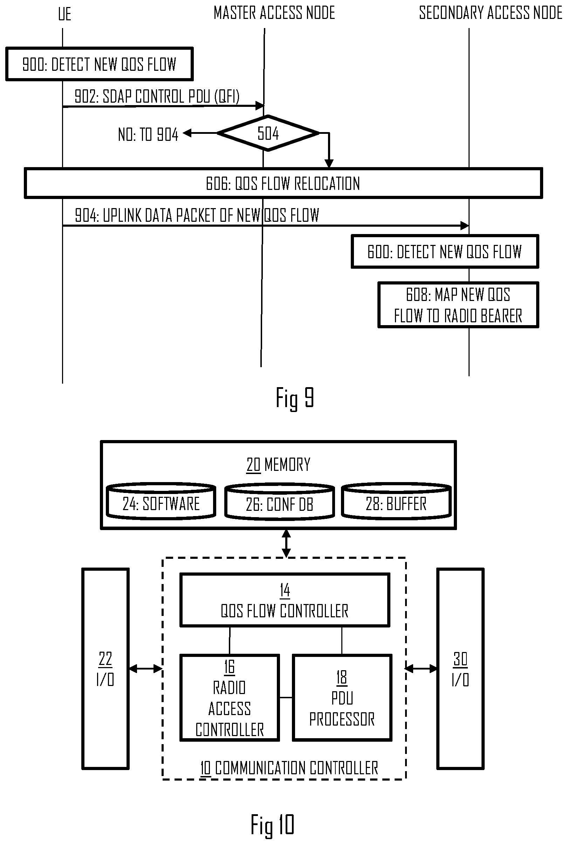

Let us now describe some embodiments of Figures 3 to 5 with reference to Figures 6 to 9. Figures 6 to 8 illustrate some embodiments of the processes of Figures 3 and 5 where the secondary access node indicates the establishment of the new QoS flow, and Figure 9 illustrates an embodiment of the processes of Figures 4 and 5 where the terminal device indicates the establishment of the new QoS flow. In an embodiment, a system comprising the master access node, the secondary access node, and the terminal device operates such that only one of the secondary access node and the terminal device reports the establishment of the new QoS flow. However, the system may operate alternatively in such a manner that both the terminal device and the secondary access node are provided with the capability of reporting the establishment of the new QoS flow to the master node.

Referring to Figure 6, the secondary access node may detect the new QoS flow in an uplink data packet received over the default radio bearer from the terminal device (UE) in block 600. Block 600 may comprise block 302 described above. Upon detecting the new QoS flow in the default radio bearer, the secondary access node may generate the message. In this embodiment, the message is a QoS flow notification message comprising the identifier of the new QoS flow. The notification message may be a message to which the secondary access node waits for no response from the master access node. The secondary access node transmits the QoS flow notification message to the master access node over the signalling link between the access nodes, e.g. the Xn interface.

In an embodiment, the message further comprises an identifier of the terminal device and/or an identifier of a protocol data unit (PDU) session of the new QoS flow. Such information enables the master access node to perform the necessary configurations with the terminal device and the UPF 110. In another embodiment, the master access node may acquire the identifier of the terminal device and/or the identifier of the PDU session in another manner than from the message indicating the establishment of the new QoS flow, e.g. in a separate message from the secondary access node or from the terminal device.

In an embodiment, the QoS flow notification message is comprised in Activity Notification Xn-message defines in the 3GPP specifications. The Activity Notification message is used to send a notification for one or several QoS flows or PDU sessions between access nodes. The conventional Activity Notification message may be modified to comprise at least one information element indicating the establishment of the new QoS flow in the default radio bearer. The Activity Notification message may use an existing field or a new field may be generated for conveying the identifier of the new QoS flow. The identifier may be a QoS flow identifier QFI defined in the 3GPP specifications. The Activity Notification message may include new cause value such as "New QoS flow".

Upon receiving the QoS flow notification message in step 602, the master access node may execute block 504. Upon selecting the master access node as the host for the new QoS flow in block 504, or upon selecting another secondary access node as the host for the new QoS flow, the master access node may execute block 606. Block 606 comprises a QoS flow relocation procedure in which the terminal device and the access node selected as the host for the new QoS flow are configured to establish the required radio bearer(s) for the new QoS flow. Block 606 may comprise performing a radio resource control (RRC) reconfiguration for the terminal device. The RRC configuration may comprise mapping the new QoS flow to one or more radio bearers. One or more new radio bearers may be established for the new QoS flow, and/or the new QoS flow may be allocated to existing one or more radio bearers.

Since the secondary access node does not wait for the response to the QoS flow notification message, the secondary access node may make an autonomous decision of whether or not to execute block 608 where the secondary access node maps the new QoS flow to one or more radio bearers hosted by the secondary access node.

In an embodiment where the secondary access node has capacity for the new QoS flow, the secondary access node decides to execute block 608. In an embodiment, the secondary access node starts a timer when executing step 602 and, upon expiry of the timer, executes block 608. The timer may be configured to count a time interval that enables execution of block 606 by the master access node such that the secondary access node does not perform block 608 unnecessarily. This procedure may be advantageous when the secondary access node has no capacity for the new QoS flow, for instance. While the timer is running or between steps 602 and 606/608, the secondary access node may forward uplink packets of the new QoS flow towards the core network (block 604). In another embodiment, the secondary access node buffers the uplink packets until the necessary configurations for the new QoS flow have been completed.

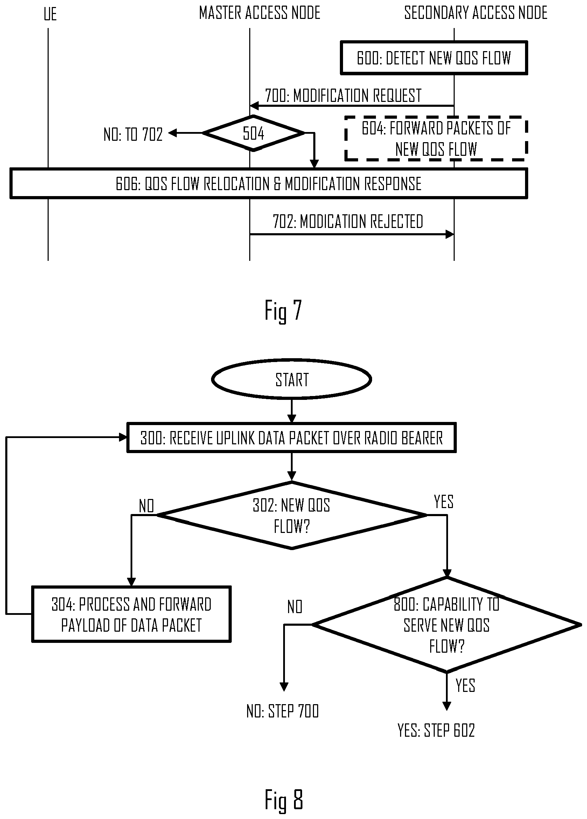

In an embodiment, the message is a reconfiguration request requesting the master access node to reconfigure at least one radio bearer for the new QoS flow. Figure 7 illustrates a process according to this embodiment. The same reference numbers in different Figures refer to the same or substantially similar functions. Upon detecting the new QoS flow in block 600, the secondary access node may generate and transmit the message as a modification request message in step 700. The modification response mandates a response from the master access node. Upon receiving the modification request, the master access node may execute block 504. Upon determining to relocate the QoS flow from the secondary access node, the master access node may execute block 606. In this embodiment, block 606 comprises generating and transmitting a modification response message from the master access node to the secondary access node as a response to the modification request of block 700. The modification response message indicates to the secondary access node that the master access node has accepted the request and is relocating the new QoS flow from the secondary access node to another access node. The secondary access node may then release the new QoS flow from a context of the terminal device. Upon determining in block 504 that the secondary access node shall host the new QoS flow, the process may proceed to step 702 where the master access node generates and transmits a modification rejected message responding to the modification request of 700.

In the embodiment of Figure 7, the modification request is a Secondary Node Modification Required message of 3GPP specifications. The message may be arranged to include an information element comprising the QFI or another identifier of the new QoS flow and, optionally, other identifiers such as the terminal device identifier and/or the PDU session identifier. The message may be arranged to include a case value "New QoS Flow" indicating to the master access node that step 700 was triggered by the detection of the new QoS flow. The identifier such as QFI may be for example included in a new information element or the QFI may be included into CG ConfigInfo message of the PDU session Resources to be released item.

In an embodiment, block 606 comprises a master node (MN) initiated secondary node (SN) modification procedure specified in the 3GPP specifications. The procedure comprises the master node transmitting a SN modification request (SgNB modification request in the 3GPP specifications) to the secondary node to request the secondary node to release the new QoS flow. If the master node selects another secondary node as the host for the new QoS flow, master node may transmit a SN modification request to the other secondary node to request the other secondary node to host the new QoS flow. The SN modification request may comprise an identifier of the new QoS flow. The secondary node(s) may confirm or reject the request by responding with a SN modification confirm message or SN modification refuse message, respectively. Upon confirming a secondary node as a new host for the new QoS flow, the secondary node may carry out a radio resource connection (RRC) reconfiguration procedure to reconfigure one or more radio bearers for the new QoS flow. The RRC reconfiguration may reconfigure a RRC connection between the secondary node and the terminal device.

In an embodiment, the secondary access node supports only one of the embodiments of Figures 6 and 7. In another embodiment, the secondary access node supports both embodiments of Figures 6 and 7 and comprises a logic for selecting the manner in which the new QoS flow is indicated to the master access node. Figure 8 illustrates an embodiment of the selection logic of the secondary access node. Referring to Figure 8, upon detecting the new QoS flow in block 302 in the above-described manner, the secondary access node may then determine, in block 800, capability of the secondary access node to serve the new QoS flow. Block 800 may comprise considering a traffic load and capacity at the secondary access node, quality of a radio channel between the secondary access node and the terminal device, and/or other factor affecting the capability.

Upon determining in block 800 that the secondary access node has the capability for providing the new QoS flow and associated radio bearer(s), the secondary access node may select the embodiment of Figure 6 and execute step 602 by transmitting the QoS flow notification message. In this case, the secondary access node may deem that no modifications by the master access node are needed to accommodate the new QoS flow. If the master access node still determines to perform the QoS flow relocation in block 606, it may do so.

Upon determining in block 800 that the secondary access node does not have the capability for providing the new QoS flow, the secondary access node may select the embodiment of Figure 7 and execute step 700 in which the secondary access node requests the master access node to perform the relocation.

Let us then describe an embodiment where the terminal device reports the new QoS flow to the master access node with reference to Figure 9. Referring to Figure 9, upon detecting the new QoS flow in the terminal device (block 900) and that the default radio bearer is hosted by the secondary access node, the terminal device generates and transmits the message indicating the new QoS flow to the master access node (step 902). The new QoS flow may be detected upon receiving an identifier of the new QoS flow from the UPF 110 over the default radio bearer, for example.

Upon receiving the message in step 902, the master access node may execute block 504. Upon determining that the secondary access node hosting the default radio bearer shall host the new QoS flow, the process may proceed to step 904 where the terminal device transmits a data packet of the new QoS flow to the secondary access node over the default radio bearer. As a consequence, the secondary access node detects the new QoS flow (block 600) and maps the new QoS flow to one or more data radio bearers. Upon determining that the master access node shall host the new QoS flow, the master access node may perform the QoS flow relocation in block 606 in the above-described manner.

In an embodiment, the terminal device selects a data radio bearer for the message on the basis of priorities of the data radio bearers the terminal device has with the master access node. The terminal device may select the data radio bearer having the highest priority and transmit the message on the selected data radio bearer.

In an embodiment, the message is a user plane message.

In an embodiment, the message is a service data adaptation protocol (SDAP) message. The message may be a SDAP control message.

In an embodiment, the message has the same format as an end-marker control PDU. The end-marker PDU is conventionally used in connection with relocating a QoS flow from a first data radio bearer to a second data radio bearer, and the end-marker PDU is transmitted as the last PDU of the QoS flow in the first data radio bearer, thereby serving as an end-mark of the QoS flow in the first data radio bearer. Table 1 below illustrates a structure of the end-marker PDU.

**Table 1**

| | | |
|---|---|---|
| Data/Control bit | Reserved | QFI |

The end-marker PDU may have the length of one octet. It may comprise a field or a bit for indicating whether the end-marker PDU is a data PDU or a control PDU. It may also comprise the identifier of the QoS flow, e.g. the QFI. Remaining bit may be reserved. When the end-marker PDU is transmitted in step 902, the data/control bit may be set to indicate a control PDU.

Upon receiving the end-marker PDU in step 902, the master access node may check the QFI comprised in the end-marker PDU. If the QFI is for a QoS flow new to the master access node, e.g. as a QoS flow having no allocated data radio bearers, the master access node may determine that the message indicates establishment of the new QoS flow.

Figure 10 illustrates an embodiment of a structure of the above-mentioned functionalities of an apparatus executing the functions of the access node in the process of Figure 3 (secondary access node) or Figure 5 (master access node) or any one of the embodiment described above for the access nodes. The apparatus may be the master access node or the secondary access node. In another embodiment, the apparatus carrying out the above-described functionalities of the access node is comprised in such a device, e.g. the apparatus may comprise a circuitry, e.g. a chip, a chipset, a processor, a micro controller, or a combination of such circuitries in the access node. The apparatus may be an electronic device comprising electronic circuitries for realizing some embodiments of the access node.

Referring to Figure 10, the apparatus may comprise a first communication interface 22 or a communication circuitry configured to provide the apparatus with capability for bidirectional communication with terminal devices 100 over a radio interface. The communication interface may comprise at least one radio modem and radio frequency circuitries for processing received control frames and data frames and control frames and data frames to be transmitted. The communication interface 22 may comprise standard well-known components such as the radio modem, an amplifier, a filter, a frequency converter, and encoder/decoder circuitries.

The apparatus may further comprise a second communication interface 30 or a communication circuitry configured to provide the apparatus with capability for bidirectional communication with other access nodes and the core network elements, as described above. The communication interface 30 may comprise circuitries for processing messages described above in connection with steps 306, 502, 602, and 700, for example. The communication interface 22 may comprise standard well-known components such as a modem, an amplifier, a filter, and encoder/decoder circuitries.

The apparatus may further comprise a memory 20 storing one or more computer program products 24 configuring the operation of at least one processor 10 of the apparatus. The memory 20 may further store a configuration database 26 storing operational configurations of the apparatus, e.g. the mappings between the QoS flows and the radio access bearers hosted by the access node. When the access node is the master access node, the configuration database may further store information on the QoS flows hosted by secondary access nodes controlled by the master access node.

The apparatus may further comprise the at least one processor 10 configured to carry out the process of Figure 3 or any one of its embodiments, or the process of Figure 5 or any one of its embodiments. Referring to Figure 10, the processor(s) 10 comprise(s) a QoS flow controller 14 configured to manage the QoS flows in the access node, perform mappings between the QoS flows and the data radio bearers, etc. For example, the QoS flow controller may perform necessary (re)configurations to meet QoS requirements of the QoS flows hosted by the access node. When the QoS flow requires more transmission resources, the QoS flow controller 14 may allocate more data radio bearers to the QoS flow or transfer the QoS flow from one data radio bearer to another.

A radio access controller 16 may establish, manage, and release data radio bearers under the control of the QoS flow controller. A PDU processor 18 may manage transfer (transmission and reception) of data packets over the data radio bearers established by the radio access controller 16. The PDU processor may forward the data between the UPF and the terminal device, as described above. Upon receiving an uplink data packet over a data radio bearer, the PDU processor 18 may read a QoS flow identifier of the received data packet. If the QoS flow identifier is new to the PDU processor, the PDU processor may notify the QoS flow controller of the new QoS flow. If the apparatus is for the secondary access node, the QoS flow controller may then trigger the execution of block 306, 602, or 700, depending on the embodiment.

When the apparatus is for the master access node, the QoS flow controller may receive the message indicating a new QoS flow through one of the interfaces 22, 30, depending on the embodiment. Upon detecting the new QoS flow allocated to the default radio bearer hosted by a secondary access node, the QoS flow controller may execute block 504.

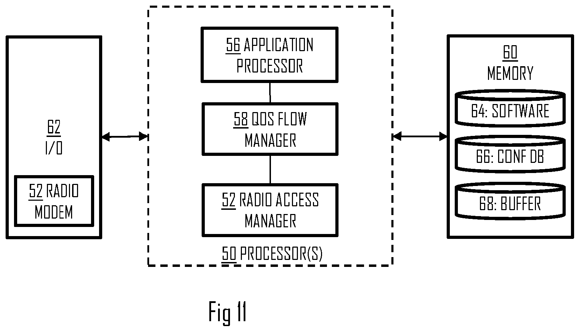

Figure 11 illustrates an embodiment of a structure of the above-mentioned functionalities of an apparatus executing the process of Figure 4 or any one of the above-described embodiments performed by the terminal device. The apparatus may be the terminal device. In other embodiments, the apparatus may be a circuitry or an electronic device realizing some embodiments of the invention in the terminal device. The apparatus may comply with 3GPP specifications for the next generation radio access network (NG-RAN) also called a 5G system. The apparatus may be or may be comprised in a computer (PC), a laptop, a tablet computer, a cellular phone, a palm computer, a sensor device, or any other apparatus provided with radio communication capability. In another embodiment, the apparatus carrying out the above-described functionalities is comprised in such a device, e.g. the apparatus may comprise a circuitry such as a chip, a chipset, a processor, a micro controller, or a combination of such circuitries in any one of the above-described devices. The apparatus may be an electronic device comprising electronic circuitries for realizing some embodiments of the present invention.

Referring to Figure 11, the apparatus may comprise a radio interface 62 providing the apparatus with radio communication capability within a wireless network provided by one or more access nodes. The radio interface may comprise a radio modem 52 and a radio frequency (RF) front end comprising standard well-known components such as an amplifier, filter, frequency-converter, (de)modulator, and encoder/decoder circuitries and one or more antennas.

The apparatus may further comprise a memory 60 storing one or more computer program products 62 configuring the operation of at least one processor of the apparatus. The memory 60 may further store a configuration database 64 storing operational configurations of the apparatus. The configuration database 64 may, for example, store the mappings between QoS flows of the apparatus and respective data radio bearers.

The apparatus may further comprise the at least one processor 50 managing the operation of the apparatus. The at least one processor 50 may comprise an application processor 56 forming an application layer. The application processor may execute computer programs forming the primary function of the apparatus. For example, if the apparatus is a sensor device, the application processor may execute one or more signal processing applications processing measurement data acquired from one or more sensor heads. If the apparatus is a computer system of a vehicle, the application processor may execute a media application and/or an autonomous driving and navigation application. The application processor may generate data to be transmitted over the radio interface and receive data through the radio interface. The application processor may output data transfer requests to a QoS flow manager 58. The QoS flow manager 58 may manage QoS flows in the apparatus. For example, upon receiving a request for data transfer from an application processor, the QoS flow manager may determine QoS flow requirements for the data transfer. Then, the QoS flow manager may establish a new QoS flow for the application data. Upon establishing a new QoS flow, the QoS flow manager may execute the process of Figure 4. The QoS flow manager may control a radio access manager 52 to determine the host of the default radio bearer and, upon detecting that the default radio bearer is a secondary access node, cause execution of block 406. The radio access manager 52 may manage the radio bearers and transfer of messages with one or more access nodes over the radio bearers.

As used in this application, the term 'circuitry' refers to one or more of the following: (a) hardware-only circuit implementations such as implementations in only analog and/or digital circuitry; (b) combinations of circuits and software and/or firmware, such as (as applicable): (i) a combination of processor(s) or processor cores; or (ii) portions of processor(s)/software including digital signal processor(s), software, and at least one memory that work together to cause an apparatus to perform specific functions; and (c) circuits, such as a microprocessor(s) or a portion of a microprocessor(s), that require software or firmware for operation, even if the software or firmware is not physically present.

This definition of 'circuitry' applies to uses of this term in this application. As a further example, as used in this application, the term "circuitry" would also cover an implementation of merely a processor (or multiple processors) or portion of a processor, e.g. one core of a multi-core processor, and its (or their) accompanying software and/or firmware. The term "circuitry" would also cover, for example and if applicable to the particular element, a baseband integrated circuit, an application-specific integrated circuit (ASIC), and/or a field-programmable grid array (FPGA) circuit for the apparatus according to an embodiment of the invention.

The processes or methods described in Figures 3 to 9 may also be carried out in the form of one or more computer processes defined by one or more computer programs. A separate computer program may be provided in one or more apparatuses that execute functions of the processes described in connection with the Figures. The computer program(s) may be in source code form, object code form, or in some intermediate form, and it may be stored in some sort of carrier, which may be any entity or device capable of carrying the program. Such carriers include transitory and/or non-transitory computer media, e.g. a record medium, computer memory, read-only memory, electrical carrier signal, telecommunications signal, and software distribution package. Depending on the processing power needed, the computer program may be executed in a single electronic digital processing unit or it may be distributed amongst a number of processing units.

Embodiments described herein are applicable to wireless networks defined above but also to other wireless networks. The protocols used, the specifications of the wireless networks and their network elements develop rapidly. Such development may require extra changes to the described embodiments. Therefore, all words and expressions should be interpreted broadly and they are intended to illustrate, not to restrict, the embodiment. It will be obvious to a person skilled in the art that, as technology advances, the inventive concept can be implemented in various ways. Embodiments are not limited to the examples described above but may vary within the scope of the claims.

## Claims

1. An apparatus for a secondary access node (104, 106) of a connection between a terminal device (100) and a cellular communication system (110), **characterised by** means for performing:
detecting, from an uplink data packet received from the terminal device over a data radio bearer, a new quality-of-service, QoS, flow in the data radio bearer;
upon said detecting, generating and transmitting to a master access node of the connection a message indicating said detection of the new QoS flow, the message comprising an identifier of the new QoS flow.

2. The apparatus of claim 1, wherein the message is a notification message to which the apparatus waits for no response from the master access node.

3. The apparatus of claim 1, wherein the message is a reconfiguration request requesting the master access node to reconfigure at least one radio bearer for the new QoS flow.

4. An apparatus for a terminal device (100) of a cellular communication system, **characterised by** means for performing:
detecting a new quality-of-service, QoS, flow in the terminal device;
determining whether a default radio bearer of the terminal device is hosted by a secondary access node or a master access node of a connection between the terminal device and the cellular communication system;
if the default radio bearer is determined to be hosted by the secondary access node, generating and transmitting to the master access node a message indicating said establishment of the new QoS flow, the message comprising an identifier of the new QoS flow.

5. The apparatus of claim 4, wherein the means are further configured, if the default radio bearer is determined to be hosted by the master access node, to not generate the message.

6. The apparatus of claim 4 or 5, wherein the message is a service data adaptation protocol message.

7. The apparatus of any preceding claim 4 to 6, wherein the message has the same format as an end-marker control protocol data unit.

8. The apparatus of any preceding claim 4 to 7, wherein the new QoS flow does not have, at the time of said detecting, a preconfigured mapping with one or more radio bearers and is therefore mapped with the default radio bearer.

9. An apparatus for a master access node (104, 106) of a connection between a terminal device (100) and a cellular communication system (110), **characterised by** means for performing:
receiving, from the secondary access node configured to host a default radio bearer of the terminal device, or from the terminal device, a message indicating establishment of a new quality-of-service, QoS, flow for the terminal device, the message comprising an identifier of the new QoS flow; and
upon receiving the message, determining a host for the new QoS flow amongst the master access node and the secondary access node; and
performing, upon determining that the master access node shall host the new QoS flow, relocation of the new QoS flow from the secondary access node to the master access node.

10. The apparatus of claim 9, wherein the means are further configured to receive the message from the terminal device as a user plane message.

11. The apparatus of claim 9, wherein the means are further configured to receive the message from the secondary access node as a notification message and, upon determining that the secondary access node shall host the new QoS flow, to transmit no response to the notification message to the secondary access node.

12. The apparatus of any preceding claim 1 to 11, wherein the message further comprises an identifier of the terminal device and/or an identifier of a protocol data unit session of the new QoS flow.

13. A method for a secondary access node (104, 106) of a connection between a terminal device (100) and a cellular communication system (110), **characterised by**:
detecting (302), by the secondary access node from an uplink data packet received from the terminal device over a data radio bearer, a new quality-of-service, QoS, flow in the data radio bearer;
upon said detecting, generating and transmitting (306) to a master access node of the connection a message indicating said detection of the new QoS flow, the message comprising an identifier of the new QoS flow.

14. A method for a terminal device (100) of a cellular communication system (110), **characterised by**:
detecting (400) a new quality-of-service, QoS, flow in the terminal device;
determining (402) whether a default radio bearer of the terminal device is hosted by a secondary access node or a master access node of a connection between the terminal device and the cellular communication system;
if the default radio bearer is determined to be hosted by the secondary access node, generating and transmitting (406) to the master access node a message indicating said establishment of the new QoS flow, the message comprising an identifier of the new QoS flow.

15. A method for a master access node (104, 106) of a connection between a terminal device (100) and a cellular communication system (110), **characterised by**:
receiving (502), from the secondary access node configured to host a default radio bearer of the terminal device or from the terminal device, a message indicating establishment of a new quality-of-service, QoS, flow for the terminal device, the message comprising an identifier of the new QoS flow; and
upon receiving the message, determining (504) a host for the new QoS flow amongst the master access node and the secondary access node; and
performing (506), upon determining that the master access node shall host the new QoS flow, relocation of the new QoS flow from the secondary access node to the master access node.

## Patentansprüche

1. Einrichtung für einen sekundären Zugangsknoten (104, 106) auf einer Verbindung zwischen einer Endgerätevorrichtung (100) und einem zellularen Kommunikationssystem (110), die durch Mittel zum Durchführen von Folgendem gekennzeichnet ist:
Detektieren eines neuen Dienstgüte(QoS)-Flusses in einem Datenfunkträger in einem Uplinkdatenpaket, das über den Datenfunkträger von der Endgerätevorrichtung empfangen wird;
nach dem Detektieren Erzeugen einer Nachricht, die die Detektion des neuen QoS-Flusses anzeigt, und Übertragen derselben zu einem Masterzugangsknoten der Verbindung, wobei die Nachricht eine Kennung des neuen QoS-Flusses umfasst.

2. Einrichtung nach Anspruch 1, wobei die Nachricht eine Benachrichtigungsnachricht ist, auf die die Einrichtung auf keine Antwort vom Masterzugangsknoten wartet.

3. Einrichtung nach Anspruch 1, wobei die Nachricht eine Neuauslegungsanforderung ist, die anfordert, dass der Masterzugangsknoten mindestens einen Funkträger für den neuen QoS-Fluss neu ausgelegt.

4. Einrichtung für eine Endgerätevorrichtung (100) eines zellularen Kommunikationssystems, die durch Mittel zum Durchführen von Folgendem gekennzeichnet ist:
Detektieren eines neuen Dienstgüte(QoS)-Flusses in der Endgerätevorrichtung;
Bestimmen, ob ein Standardfunkträger der Endgerätevorrichtung von einem sekundären Zugangsknoten oder einem Masterzugangsknoten einer Verbindung zwischen der Endgerätevorrichtung und dem zellularen Kommunikationssystem gehostet wird;
wenn bestimmt wird, dass der Standardfunkträger vom sekundären Zugangsknoten gehostet wird, Erzeugen einer Nachricht, die den Aufbau des neuen QoS-Flusses anzeigt, und Übertragen derselben zum Masterzugangsknoten, wobei die Nachricht eine Kennung des neuen QoS-Flusses umfasst.

5. Einrichtung nach Anspruch 4, wobei, wenn bestimmt wird, dass der Standardfunkträger vom Masterzugangsknoten gehostet wird, die Mittel ferner dazu ausgelegt sind, die Nachricht nicht zu erzeugen.

6. Einrichtung nach Anspruch 4 oder 5, wobei die Nachricht eine Dienstdatenanpassungsprotokollnachricht ist.

7. Einrichtung nach einem der vorhergehenden Ansprüche 4 bis 6, wobei die Nachricht dasselbe Format hat wie eine Endmarkersteuerprotokolldateneinheit.

8. Einrichtung nach einem der vorhergehenden Ansprüche 4 bis 7, wobei der neue QoS-Fluss zur Zeit des Detektierens keine vorausgelegte Zuordnung zu einem oder mehreren Funkträgern aufweist und daher dem Standardfunkträger zugeordnet ist.

9. Einrichtung für einen Masterzugangsknoten (104, 106) auf einer Verbindung zwischen einer Endgerätevorrichtung (100) und einem zellularen Kommunikationssystem (110), die durch Mittel zum Durchführen von Folgendem gekennzeichnet ist:
Empfangen einer Nachricht, die den Aufbau eines neuen Dienstgüte(QoS)-Flusses für die Endgerätevorrichtung anzeigt, vom sekundären Zugangsknoten, der dazu ausgelegt ist, einen Standardfunkträger der Endgerätevorrichtung zu hosten, oder von der Endgerätevorrichtung, wobei die Nachricht eine Kennung des neuen QoS-Flusses umfasst; und
nach Empfangen der Nachricht Bestimmen eines Hosts für den neuen QoS-Fluss aus dem Masterzugangsknoten und dem sekundären Zugangsknoten; und
nach dem Bestimmen, dass der Masterzugangsknoten den neuen QoS-Fluss hosten soll, Durchführen einer Umpositionierung des neuen QoS-Flusses vom sekundären Zugangsknoten zum Masterzugangsknoten.

10. Einrichtung nach Anspruch 9, wobei die Mittel ferner dazu ausgelegt sind, die Nachricht als eine Benutzerebenennachricht von der Endgerätevorrichtung zu empfangen.

11. Einrichtung nach Anspruch 9, wobei die Mittel ferner dazu ausgelegt sind, die Nachricht als eine Benachrichtigungsnachricht vom sekundären Zugangsknoten zu empfangen und nach Bestimmen, dass der sekundäre Zugangsknoten den neuen QoS-Fluss hosten soll, keine Benachrichtigungsnachricht zum sekundären Zugangsknoten zu übertragen.

12. Einrichtung nach einem der vorhergehenden Ansprüche 1 bis 11, wobei die Nachricht ferner eine Kennung der Endgerätevorrichtung und/oder eine Kennung einer Protokolldateneinheitssitzung des neuen QoS-Flusses umfasst.

13. Verfahren für einen sekundären Zugangsknoten (104, 106) auf einer Verbindung zwischen einer Endgerätevorrichtung (100) und einem zellularen Kommunikationssystem (110), das durch Folgendes gekennzeichnet ist:
Detektieren (302) eines neuen Dienstgüte(QoS)-Flusses in einem Datenfunkträger durch den sekundären Zugangsknoten in einem Uplinkdatenpaket, das über den Datenfunkträger von der Endgerätevorrichtung empfangen wird;
nach dem Detektieren Erzeugen einer Nachricht, die die Detektion des neuen QoS-Flusses anzeigt, und Übertragen (306) derselben zu einem Masterzugangsknoten der Verbindung, wobei die Nachricht eine Kennung des neuen QoS-Flusses umfasst.

14. Verfahren für eine Endgerätevorrichtung (100) eines zellularen Kommunikationssystems (110), das durch Folgendes gekennzeichnet ist:
Detektieren (400) eines neuen Dienstgüte(QoS)-Flusses in der Endgerätevorrichtung;
Bestimmen (402), ob ein Standardfunkträger der Endgerätevorrichtung von einem sekundären Zugangsknoten oder einem Masterzugangsknoten einer Verbindung zwischen der Endgerätevorrichtung und dem zellularen Kommunikationssystem gehostet wird;
wenn bestimmt wird, dass der Standardfunkträger vom sekundären Zugangsknoten gehostet wird, Erzeugen einer Nachricht, die den Aufbau des neuen QoS-Flusses anzeigt, und Übertragen (406) derselben zum Masterzugangsknoten, wobei die Nachricht eine Kennung des neuen QoS-Flusses umfasst.

15. Verfahren für einen Masterzugangsknoten (104, 106) auf einer Verbindung zwischen einer Endgerätevorrichtung (100) und einem zellularen Kommunikationssystem (110), das durch Folgendes gekennzeichnet ist:
Empfangen (502) einer Nachricht, die den Aufbau eines neuen Dienstgüte(QoS)-Flusses für die Endgerätevorrichtung anzeigt, vom sekundären Zugangsknoten, der dazu ausgelegt ist, einen Standardfunkträger der Endgerätevorrichtung zu hosten, oder von der Endgerätevorrichtung, wobei die Nachricht eine Kennung des neuen QoS-Flusses umfasst; und
nach Empfangen der Nachricht Bestimmen (504) eines Hosts für den neuen QoS-Fluss aus dem Masterzugangsknoten und dem sekundären Zugangsknoten; und
nach dem Bestimmen, dass der Masterzugangsknoten den neuen QoS-Fluss hosten soll, Durchführen (506) einer Umpositionierung des neuen QoS-Flusses vom sekundären Zugangsknoten zum Masterzugangsknoten.

## Revendications

1. Appareil pour un nœud d'accès secondaire (104, 106) d'une connexion entre un dispositif terminal (100) et un système de communication cellulaire (110), **caractérisé par** des moyens pour réaliser les étapes suivantes :
détecter, à partir d'un paquet de données de liaison montante reçu à partir du dispositif terminal sur un support radio de données, un nouveau flux de qualité de service, QoS, dans le support radio de données ;
à ladite détection, générer et transmettre à un nœud d'accès maître de la connexion un message indiquant ladite détection du nouveau flux QoS, le message comprenant un identifiant du nouveau flux QoS.

2. Appareil selon la revendication 1, dans lequel le message est un message de notification auquel l'appareil n'attend pas de réponse à partir du nœud d'accès maître.

3. Appareil selon la revendication 1, dans lequel le message est une demande de reconfiguration demandant au nœud d'accès maître de reconfigurer au moins un support radio pour le nouveau flux QoS.

4. Appareil pour un dispositif terminal (100) d'un système de communication cellulaire, **caractérisé par** des moyens pour réaliser les étapes suivantes :
détecter un nouveau flux de qualité de service, QoS, dans le dispositif terminal ;
déterminer si un support radio par défaut du dispositif terminal est hébergé par un nœud d'accès secondaire ou un nœud d'accès maître d'une connexion entre le dispositif terminal et le système de communication cellulaire ;
si le support radio par défaut est déterminé comme étant hébergé par le nœud d'accès secondaire, générer et transmettre au nœud d'accès maître un message indiquant ledit établissement du nouveau flux QoS, le message comprenant un identifiant du nouveau flux QoS.

5. Appareil selon la revendication 4, dans lequel les moyens sont en outre configurés, si le support radio par défaut est déterminé comme étant hébergé par le nœud d'accès maître, pour ne pas générer le message.

6. Appareil selon la revendication 4 ou 5, dans lequel le message est un message de protocole d'adaptation de données de service.

7. Appareil selon l'une quelconque des revendications précédentes 4 à 6, dans lequel le message a le même format qu'une unité de données de protocole de commande de marqueur de fin.

8. Appareil selon l'une quelconque des revendications précédentes 4 à 7, dans lequel, au moment de ladite détection, le nouveau flux QoS n'a pas de mappage préconfiguré avec un ou plusieurs supports radio, et est donc mappé avec le support radio par défaut.

9. Appareil pour un nœud d'accès maître (104, 106) d'une connexion entre un dispositif terminal (100) et un système de communication cellulaire (110), **caractérisé par** des moyens pour réaliser les étapes suivantes :
recevoir, à partir du nœud d'accès secondaire configuré pour héberger un support radio par défaut du dispositif terminal ou à partir du dispositif terminal, un message indiquant l'établissement d'un nouveau flux de qualité de service, QoS, pour le dispositif terminal, le message comprenant un identifiant du nouveau flux QoS ; et
à la réception du message, déterminer un hôte pour le nouveau flux QoS parmi le nœud d'accès maître et le nœud d'accès secondaire ; et
réaliser, lorsqu'il a été déterminé que le nœud d'accès maître doit héberger le nouveau flux QoS, une relocalisation du nouveau flux QoS du nœud d'accès secondaire au nœud d'accès maître.

10. Appareil selon la revendication 9, dans lequel les moyens sont en outre configurés pour recevoir le message à partir du dispositif terminal comme message de plan d'utilisateur.

11. Appareil selon la revendication 9, dans lequel les moyens sont en outre configurés pour recevoir le message à partir du nœud d'accès secondaire comme message de notification et, lorsqu'il a été déterminé que le nœud d'accès secondaire doit héberger le nouveau flux QoS, pour ne transmettre aucune réponse au message de notification au nœud d'accès secondaire.

12. Appareil selon l'une quelconque des revendications précédentes 1 à 11, dans lequel le message comprend en outre un identifiant du dispositif terminal et/ou un identifiant d'une session d'unité de données de protocole du nouveau flux QoS.

13. Procédé pour un nœud d'accès secondaire (104, 106) d'une connexion entre un dispositif terminal (100) et un système de communication cellulaire (110), **caractérisé par** :
la détection (302), par le nœud d'accès secondaire à partir d'un paquet de données de liaison montante reçu à partir du dispositif terminal sur un support radio de données, d'un nouveau flux de qualité de service, QoS, dans le support radio de données ;
à ladite détection, la génération et la transmission (306) à un nœud d'accès maître de la connexion d'un message indiquant ladite détection du nouveau flux QoS, le message comprenant un identifiant du nouveau flux QoS.

14. Procédé pour un dispositif terminal (100) d'un système de communication cellulaire (110), **caractérisé par** :
la détection (400) d'un nouveau flux de qualité de service, QoS, dans le dispositif terminal ;
la détermination (402) précisant si un support radio par défaut du dispositif terminal est hébergé par un nœud d'accès secondaire ou un nœud d'accès maître d'une connexion entre le dispositif terminal et le système de communication cellulaire ;
si le support radio par défaut est déterminé comme étant hébergé par le nœud d'accès secondaire, la génération et la transmission (406) au nœud d'accès maître d'un message indiquant ledit établissement du nouveau flux QoS, le message comprenant un identifiant du nouveau flux QoS.

15. Procédé pour un nœud d'accès maître (104, 106) d'une connexion entre un dispositif terminal (100) et un système de communication cellulaire (110), **caractérisé par** :
la réception (502), à partir du nœud d'accès secondaire configuré pour héberger un support radio par défaut du dispositif terminal ou à partir du dispositif terminal, d'un message indiquant l'établissement d'un nouveau flux de qualité de service, QoS, pour le dispositif terminal, le message comprenant un identifiant du nouveau flux QoS ; et
à la réception du message, la détermination (504) d'un hôte pour le nouveau flux QoS parmi le nœud d'accès maître et le nœud d'accès secondaire ; et
la réalisation (506), lorsqu'il a été déterminé que le nœud d'accès maître doit héberger le nouveau flux QoS, d'une relocalisation du nouveau flux QoS du nœud d'accès secondaire au nœud d'accès maître.
